# EUROPEAN PATENT SPECIFICATION

(11) **EP 2 458 907 B1**
(45) Date of publication and mention of the grant of the patent: **06.06.2018**
(21) Application number: 11183449.5
(22) Date of filing: 30.09.2011
(51) Int. Cl.: H04W 12/08, H04L 29/06

(54) **Method and device for controlling access between wireless communication devices**
Verfahren und Vorrichtung zur Steuerung des Zugriffs zwischen drahtlosen Kommunikationsvorrichtungen
Procédé et dispositif pour contrôler l'accès entre dispositifs de communication sans fil

(30) Priority: 25.11.2010 US 954650; 25.11.2010 US 954653
(43) Date of publication of application: 30.05.2012
(73) Proprietor: Psion Inc., Mississauga, ON L5N 7J9 (CA)
(72) Inventor: Lee, Reo, Mississauga Ontario L5N 7J9 (CA); Meghdies Vardeh, Eil Beron, Mississauga Ontario L5N 7J9 (CA)
(74) Representative: LKGLOBAL Lorenz & Kopf PartG mbB Patentanwälte

(56) References cited:
- EP-A1- 1 868 343
- GB-A- 2 439 364
- US-A1- 2003 045 272
- US-A1- 2008 301 779
- "Specification of the Bluetooth System, Specification Volume 6", , 30 June 2010 (2010-06-30), pages 2165-2300, XP55016390, Retrieved from the Internet: URL:http://developer.bluetooth.org/Knowled geCenter/TechnologyOverview/Documents/Core _SPEC.pdf [retrieved on 2012-01-12]

## Description

The present invention relates generally to wireless communication devices such as Bluetooth enabled computing devices, and specifically, to a system and method for controlling communication access between such devices.

As used herein, the term 'Bluetooth' refers to wireless communication, in accordance with the Bluetooth Core Specification and it's updates and addendums as published by the Bluetooth Special Interest Group, and to any similar wireless communication technology. (Bluetooth is a registered trade mark currently owned by Bluetooth SIG Inc.)

As is known in the art, Bluetooth is a wireless technology and protocol that allows relatively short range communications (currently approximately 100m or less) between Bluetooth enabled computing devices. Bluetooth enabled computing devices can include portable and/or fixed computing devices and/or peripherals. Bluetooth communication operates in the 2.4 GHz ISM radio frequency. Typically, the range of Bluetooth technology is application specific and can be pre-defined.

Most commonly, Bluetooth computing devices operate in a master-slave configuration such that a master Bluetooth computing device can communicate with a number of slave computing devices (i.e. within a piconet or Bluetooth communication network of devices). In turn each of the slave computing devices can act as a master within a separate piconet and connect to a number of designated devices.

Conventionally, Bluetooth security measures have been limited to a few main modes of security. In one mode, no authentication means is defined for the computing device such that anyone can access the device via Bluetooth-based communication. In another mode, a user can switch the Bluetooth connection mode to "non-discoverable" and avoid being discovered by other Bluetooth computing devices entirely. In this mode, the device could also be set such that the non-discoverable mode occurs for a predefined period of time.

In yet another mode, users of different Bluetooth computing devices may need to authenticate the connection by exchanging a password or PIN number between one another after which the connection can be established.

However, all these types of security are limited in their capabilities and in some cases could still allow unwanted connections to be made. Also, it may not be desirable for a computing device to define themselves as non-discoverable as this would limit the desired connections that should occursubsequently.

Accordingly, it would be advantageous to provide an improved method of controlling access between a computing device and other computing devices in a Bluetooth communication network.

EP 1868343 A1 provides methods and systems for communicating information by a communication device. The method may include detecting a second handheld communication device that is within range of a first handheld communication device. The first handheld communication device may have a list of devices that are authorised to communicate with the first handheld communication device. If the second handheld communication device is authorised, then a direct communication link may be established between the first handheld communication device and the second handheld communication device. To determine authorisation of the second handheld communication device, the first handheld communication device may match identification information received from the second handheld communication device in a beacon signal with identification information stored within the list of devices that are authorised to communicate with the first handheld communication device. US2003/0045272 A1 provides a mobile ad hoc network. Communications with various devices are limited to devices that are listed on a contacts list. A password may be required to change the contacts list. Other devices may also have contact lists that are only accessible with a password.

It is an object of the present invention to provide a novel method and system for controlling access between Bluetooth devices which obviates or mitigates at least one of the above-mentioned disadvantages of the prior art.

### SUMMARY OF THE INVENTION

In accordance with a first aspect of the invention, a method comprising the steps of appended claim 1 is provided. In accordance with a second aspect of the invention, an apparatus comprising the features of appended claim 9 is provided. The dependent claims provide further details of embodiments of the invention.

Preferably, a restricted mode of operation is configured to secure the access list (291) to prevent subsequent unauthorized modification thereof. Also preferably, the method further comprises preventing subsequent discovery requests from the first computing device in response to initiating the restricted mode of operation. Also preferably, the at least one identifier is selected from a group consisting of: IP address; MAC address; device serial number; and Bluetooth address.

### BRIEF DESCRIPTION OF THE FIGURES

Embodiments of the present invention will now be described, by way of example only with, reference to the following Figures in which:
Figure 1 shows a schematic representation of a Bluetooth communication network with a first computing device in accordance with the present invention;
Figure 2 is block diagram illustrating functional subsystems of the first computing device of Figure 1;
Figure 3 is a flowchart of the steps of a method in accordance with the present invention for configuring or reconfiguring an access list on the first computing device of Figure 1;
Figure 4 is a flowchart of the steps of a method in accordance with the present invention for restricting access between the first computing device and a plurality of other computing devices in a Bluetooth network;
Figures 5a through 5g show user interface elements illustrating a method in accordance with the present invention for configuring an access list on the first computing device of Figure 1 and entering restricted mode operation on the first computing device; and
Figures 6a through 6c show user interface elements illustrating the operation of the first computing device in the restricted mode of operation, in accordance with the present invention.

### DETAILED DESCRIPTION

In view of the limitations of existing Bluetooth communication systems, it would be advantageous to provide for configuration of an access list (also referred to herein as a restricted device, or restricted access, list) which, when installed on a computing device, controls access between the computing device and other computing devices accessible to it via a Bluetooth communication network. The controlled access is used to specifically restrict which computing devices within the Bluetooth communication network are allowed to connect to the computing device (as well as which other computing devices the computing device is allowed to connect to). Based on the access list, controlled communication occurs between the computing device and other Bluetooth computing devices defined in the access list.

As used herein, the term "computing device" is intended to include a wide range of digital devices including, without limitation, devices which generate digital information, such as computer terminals, RFID readers, Bar Code Scanners, etc. and devices which use digital information, such as printers. Accordingly, computing devices can include fixed and/or portable devices and/or embedded devices such as mobile computers, mobile phones, digital cameras, scanners, printers, GPS receivers, phone headsets, one-chip Bluetooth devices, and embedded electronics (e.g. Bluetooth phones embedded with cars) and any other electronic devices which support Bluetooth wireless communications as will be envisaged by a person skilled in the art.

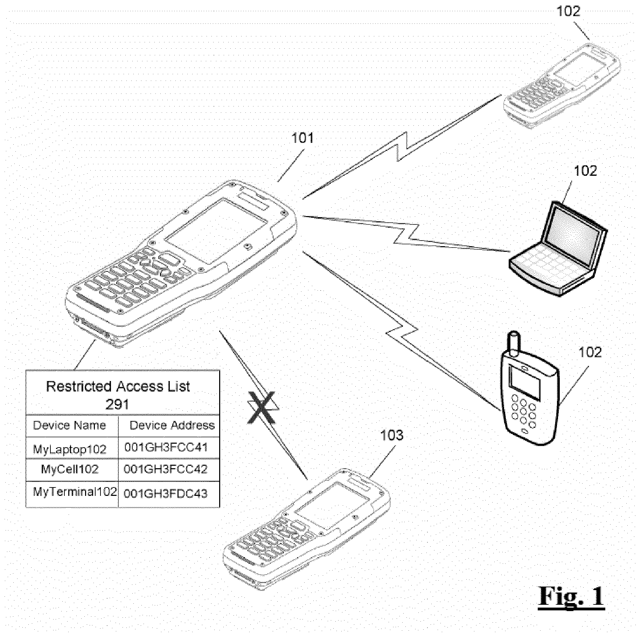

Figure 1 shows an example of a Bluetooth communication network in accordance with one embodiment of the present invention. In the embodiment depicted in Figure 1, computing device 101 is the master, or computing device (also referred to as the first computing device), which contains a restricted device list 291 stored in a memory 290 of the computing device 101. In one embodiment, computing device 101 discovers and manages connection information in access list 291 from a plurality of devices within a given locality.

According to one embodiment, computing device 101 may be pre-loaded with access list 291 that is previously defined by an external device (e.g. a second computing device) or access list 291 may be generated locally on computing device 101. In the case where access list 291 is locally generated, the following steps occur between computing device 101 and the plurality of devices accessible to it via the Bluetooth communication network. That is, computing device 101 is configured for discovering a list of devices available for communication (e.g. devices 102 and 103). Referring to Figure 1, it is noted that devices 101, 102, and 103 are considered to be Bluetooth enabled devices. Computing device 101 may communicate with the plurality of devices 102, 103 using different communication schemes such as secure or non-secure Bluetooth and other communication protocols designed to work in a Bluetooth communication network. In response to remotely discovering the list of devices available for communication, a selected number of computing devices are defined in access list 291 (e.g. devices 102). It is noted that in Figure 1, for the sake of convenience a number of devices are denoted as 102 to indicate computing devices that are on access list 291 of computing device 101.

In one embodiment, the access list 291 is defined on a second or external computing device. In one aspect, the access list 291 can be defined on the second computing device by receiving user input providing at least one identifier to identify the at least one selected computing device for the at least one entry. That is, a user can be aware of the desired Bluetooth addresses (i.e. - the radio communication protocol addresses) that a particular computing device should be permitted to connect to and thus the access list 291 is created by manually inputting the desired device identifier(s). As is described herein, the at least one identifier is selected from the group consisting of: IP address, MAC address, serial number, and Bluetooth address. In one aspect, the second computing device is a non-Bluetooth device.

Accordingly, access list 291 provides a listing of a selected number of devices (e.g. 102) from the available communication devices (e.g. 102, 103) being permitted to access computing device 101 for subsequent communication therewith. As illustrated in Figure 1, access list 291 further includes informational elements related to each device on the list. The informational elements also referred to as device identifiers can include for example one or more of the following: a Bluetooth address, a device name, a device address, a device type, a serial number, a device model number, and an IP address, etc. It will be noted that access list 291 contains entries for each of the devices permitted to access computing device 101. Accordingly, access list may be defined and/or as a list, a set, a vector, a single identifier (e.g. one or more Bluetooth addresses), or any other form for conveying the device identifiers as will be envisaged by a person skilled in the art.

As will be understood by a person skilled in the art, Bluetooth device addresses typically comprise a 48 bit address used to identify each Bluetooth enabled device and is usually denoted by "BD_ADDR" in technical specification. However, other types of Bluetooth device addresses as envisaged by a person skilled in the art can be used herein. In some cases, a pseudo-name or other device name representing the underlying Bluetooth address may be used as the device identifiers for access list 291.

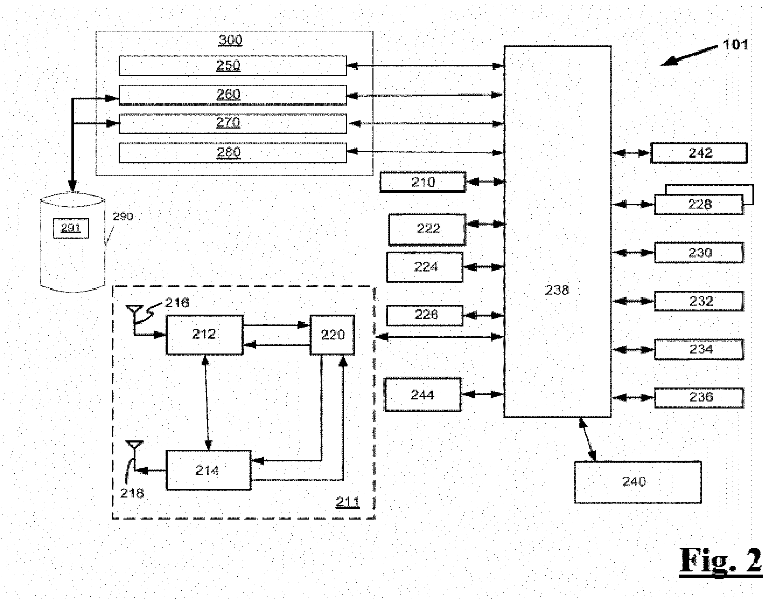

The selected number of devices 102 allowed to access computing device 101 as defined in access list 291 on computing device 101 are also referred to as "safe" devices 102 herein. As illustrated in Figure 1, one or more devices 103 may not be listed on the access list 291 of computing device 101 and thus as will be described below, will not be allowed to communicate with computing device 101 via the Bluetooth communication network. That is, a Bluetooth manager 300 of computing device 101 (see Figure 2) will prevent connections between computing device 101 and device 103. As will also be described below, once computing device 101 enters a restricted access mode (such as to limit Bluetooth connections to those listed in access list 291), then existing connections to devices (e.g. 103) not listed on access list 291 of computing device 101 are dropped or otherwise terminated.

Computing devices 101, 102 and 103 may be fixed or portable systems configured to operate using Bluetooth communication and will be referred to variously and interchangeably as a handheld computing device, mobile computer, mobile terminal, a computing device or a device in the disclosure herein. Further, it is noted that the embodiment described in relation to Figure 1 shows a memory 290 of computing device 101 storing access list 291 for the device, additional access lists may be provided and/or defined on devices 102 or 103. That is, permitting Bluetooth communication and connection between computing device 101 and 102 may be further be dependent on the presence of computing device 101 on one or more access lists defined on devices 102.
In one aspect, the restricted Bluetooth communication described herein for using access lists 291 for controlling communication between a first computing device (e.g. 101) and a plurality of other computing devices (e.g. 102, 103) that are Bluetooth enabled devices is further configured to operate in combination with existing Bluetooth security measures. For example, in one aspect, subsequent to determining the existence of a device 102 on access list 291 of computing device 101, password and other authorization measures are exchanged prior to allowing connection and communication between the devices (e.g. 101 and 102). That is, access list 291 provides a filtering mechanism for restricting Bluetooth communication for computing device 101 to those computing devices provided in the access list 291.

Figure 2 illustrates an architecture of the functional subsystems of computing device 101 in accordance with one embodiment. Computing device 101, which may be a handheld device, can have the capability of communicating at least data, and possibly any of data, audio and voice communications, to and from devices as well as data acquisition sources within a communication network.

Computing device 101 may include wired or wireless communication capability. In the wireless configuration, the computing device 101 typically includes radio frequency (RF) communication subsystem 211, which includes a receiver 212, a transmitter 214, and associated components, such as one or more embedded or internal antenna elements 216 and 218, and a processing module such as a digital signal processor (DSP) 220. As will be apparent to those skilled in field of communications, the particular design of RF communication subsystem 211 depends on the specific communication network in which computing device 101 is intended to operate, but can include communication functionalities such as radio-frequency identification (RFID), Wi-Fi WLAN based on IEEE 802.11 standards, Zigbee, Z-Wave and the like.

Computing device 101 includes a microprocessor 238 which controls general operation of device 101. Microprocessor 238 also interacts with functional device subsystems, such as a screen display module 222, a flash memory 224, random access memory (RAM) 226, auxiliary input/output (I/O) subsystems 228, serial port 230, keyboard module 232, speaker 234, microphone 236, short-range communications subsystem 240, such as Bluetooth™ for example, and Universal Serial Bus (USB) expansion port 242 for peripherals. Computing device 101 may include a power source such as battery module 210 which may also be removable and replaceable from computing device 101. Computing device 101 may also include a positioning device 244, such as a GPS receiver for example, for receiving positioning information.

Still with regard to Figure 2, operating system software used by microprocessor 238 may be stored in a persistent store such as flash memory 224, which may alternatively be a read-only memory (ROM) or similar storage element (not shown). Those skilled in the art will appreciate that the operating system, specific device applications, or parts thereof, may be temporarily loaded into a volatile store such as RAM 226.

Microprocessor 238, in addition to its operating system functions, enables execution of software applications on computing device 101. A predetermined set of applications, which control basic device operations, or even more customized, advanced device operations, may be installed on computing device 101 during its manufacture, such as during the components configuration process described herein. These operations typically include data and voice communication applications, for example. As described herein, access list 291 may be defined locally on computing device 101, loaded from another computing device or a combination thereof. Accordingly, applications and/or access lists 291 may also be subsequently loaded onto computing device 101 through communication subsystem 211, auxiliary I/O subsystem 228, serial port 230, USB port 242, short-range communications subsystems 240, or any other suitable subsystem, and installed by a user in RAM 226, or persistent store 224, for execution by microprocessor 238. Such flexibility in application installation increases the functionality of computing device 101 and may provide enhanced on-device features, communication-related features, or both.

As will be apparent to those skilled in field of communications, the particular design of communication subsystem 211 depends on the communication network in which computing device 101 is intended to operate, and may include various communication functionalities as will be understood by a person skilled in the art.

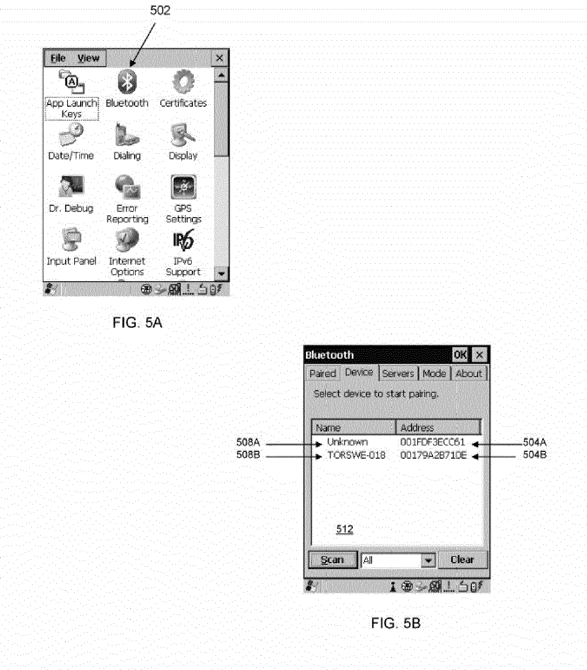

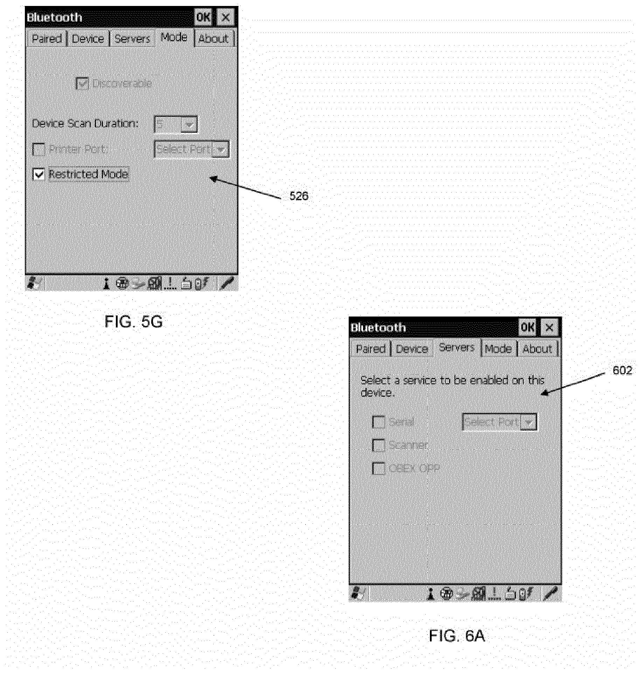

Display screen module 222 of computing device 101 may be used to visually present a software application's graphical user interface (GUI) to a user via a display screen. As will be described in relation to example screen shots shown in Figs. 5A-5G and 6A-6C, the GUI may be used to display results provided by a discovery module 250, modifications made by a configuration module 260, pairing connections made via a pairing module 280 and restrictions provided by an access control module 270 of a Bluetooth manager 300 and each of these modules is discussed below in more detail. In one aspect, access control module 270 operates independently of Bluetooth manager 300 and is configured to control communication between devices in the Bluetooth communication network. In another aspect, the access control module 270 can be a separate entity (e.g. either in software and/or hardware) which controls communication access between Bluetooth devices and is configured to communicate with the Bluetooth manager 300.

Display screen module 222 may employ a touch screen display, in which case the user can manipulate application data by modifying information on the GUI using direct touches by a finger or stylus. Depending on the type of computing device 101, the user may have access to other types of input devices, such as, for example, buttons, a scroll wheel, trackball or light pen or any other input devices as will be envisaged by a person skilled in the art.

A graphical user interface presented at display screen module 222 of computing device 101 may enable an operator or administrator to interact therewith. For example, an administrator can manage the processes of having computing device 101 being capable of one or more of the following functionalities, including: identification as a computing device using a parameter setting, initiating discovery, configuring and/or downloading access list(s) 291, restricting communication with other devices using one or more access lists 291 stored on memory 290, establishing communication with other devices in the Bluetooth communication network, and selecting the configuration of components and data to be downloaded from computing device 101 to one or more of other computing devices 102. It further contemplated that computing device 101 may be communicatively coupled to a remotely located database (not shown).

As illustrated in Figure 2, and as mentioned above, computing device 101 comprises a Bluetooth manager 300 for facilitating Bluetooth restricted mode operation between computing device 101 and the plurality of computing devices (e.g. 102, 103) located in a Bluetooth communication network. Bluetooth manager 300 further comprises a discovery module 250, a configuration module 260, an access control module 270 (for interacting with a storage 290 including one or more access lists 291) and a pairing/connection module 290.

Discovery module 250 of computing device 101 can comprise any combination of software, firmware and hardware for implementing a discovery mechanism for discovering new devices present within Bluetooth communication network. In one aspect, discovery module 250 can also allow a limited initial exchange of information between computing device 101 and new devices within Bluetooth communication network. Accordingly, discovery module 250 is configured for generating a discovery request at the first computing device (e.g. computing device 101) such that the discovery request is targeted to a plurality of computing devices (e.g. 102, 103 and other Bluetooth enabled computing devices accessible to device 101) to generate a list of discovered devices available for communication (e.g. 102 and 103). It is further contemplated that discovery module 250 may be used to provide an update mechanism for updating the list of discovered computing devices (e.g. 102 and 103).

The discovery requests may be multi-cast or broadcasted, or any variation thereof. It is contemplated that the specific implementation of IP addressing for discovery may be made taking into account the network management considerations, such as security and bandwidth concerns, of the network administrator or the relevant network administration policy. A discovery request may be sent out periodically, until terminated at computing device 101. As discussed herein, in one embodiment, once the computing device 101 enters a restricted mode operation (which entry can be effected manually, semiautomatically, and/or automatically), Bluetooth manager 300 (e.g. via access control module 270) is configured to prevent the discovery module 250 from generating subsequent discovery requests until the Bluetooth restricted mode of operation no longer exists.

In one embodiment, an update discovery request initiated at discovery module 250 may be sent out periodically until terminated at computing device 101, or until all the targeted computing devices take an action in response to the discovery request. Computing device 101 can be capable of identifying itself to other computing devices 102, prior to sending out the discovery request.

Configuration module 260 of computing device 101 can comprise any combination of software, firmware and hardware for storing various configuration files, or software components, and other related configuration information. However, it is also contemplated that the configuration files, one or more access lists 291, software components and other related configuration information can be stored in specific memory 224, 226, 290 locations of computing device 101. Configuration module 260 is configured to facilitate defining one or more devices listed in access list 291. In one aspect, configuration module 260 interacts with discovery module 250 and with a user interface of computing device 101 such as to allow selection of a desired number of devices from the available devices for being included in access list 291.

As discussed above, discovery module 250 generates the listing of the available devices for communication. The listing of available devices (e.g. device 102 and 103) provided by discovery module 250 is also referred to herein as discovered devices. In one embodiment, the user interface of computing device 101 is used to facilitate selection of the devices permitted to access first computing device 101 from the discovered devices (e.g. 102, 103).

In one example, an administrator defines access list 291 on first computing device 101. As described earlier, access list 291 contains a listing of a selected number of devices (e.g. 102) permitted to access first computing device 101. Access list 291 may be defined either manually, or automatically (i.e. a listing of pre-defined discovered devices obtained via discovery module 250 at a particular time may be stored in access list 291) or semiautomatically (i.e. according to pre-defined criteria for filtering the listing of discovered devices). In one aspect, the administrator may want to select certain selected computing devices (e.g. 102) for placement within access list 291 from the list of discovered devices provided by discovery module 250. In another aspect, access list 291 for computing device 101 may be partially and/or fully provided from a previous selection of permitted devices performed on a different device (e.g. device 102). In yet another aspect, configuration module 260 may be used to define a filter which filters the listing of discovered devices (e.g. 102 and 103) provided from discovery module 250 according to pre-defined criteria. The pre-defined criteria can include, for example, a commonality of device addresses, services provided, serial numbers, type of devices, or device names between the discovered devices. The pre-defined criteria can also include other informational element identifiers for the devices as will be apparent to those of skill in the art.

In one embodiment, once access list 291 is defined and/or loaded on computing device 101, a restricted mode of operation may be initiated on first computing device 101 via configuration module 260. The restricted mode of operation is configured to secure access list 291 such as to prevent subsequent unauthorized access thereto. In one aspect, the administrator may request initiating restricted access mode of operation on first computing device 101 via the user interface of Bluetooth manager 300. Additionally, the restricted access mode of operation is configured to prevent any subsequent discovery requests on first computing device 101.

For example, once the administrator has activated a restricted mode of operation for a computing device, the administrator can limit authorization for accessing the restricted mode of operation (and exiting the restricted mode) via a password or other verification means. Accordingly, in the present example, it may not be desirable to generate a listing of discovered devices on display screen 222 of computing device 101 if the user of computing device 101 is unable to make modifications to access list 291 or establish connections with other devices not defined in access list 291 due to their limited authorization. In such a case, this allows administrator(s) to have control over their computing devices such as to specifically control Bluetooth communications between first computing device 101 and other computing devices such that once access lists 291 are defined on the computing device (e.g. computing device 101), they can not be altered, modified or discarded without pre-defined authorization (e.g. by the administrators).

As described herein, once access list 291 is defined on one computing device (e.g. computing device 101) it may be installed, downloaded or otherwise transferred to another computing device (e.g. one of devices 102). Typically, access list 291 is copied along with the password or authorization means associated with access list 291. In this way, an administrator can minimize the amount of time spent for generating access list 291 on different computing devices. Once copied onto another computing device (e.g. 102), access list 291 can subsequently be modified and added to with pre-defined authorization.

The configuration files, access lists 291, software components and other related configuration or provisioning information, whether stored in configuration module 260 or other memory 224, 226, 290 locations, may be specially designated and earmarked as sharable information within computing device 101. As discussed herein, access lists 291 may be password protected and/or otherwise encrypted such as to prevent unauthorized modification when copying or sharing with other devices. Additionally, a password or other verification mechanisms may be needed to allow sharing of access list 291.

Other configuration information provided in configuration module 260 can include, for example, configuration information related to the associated groups of computing devices that are able to access (and receive) access list 291 defined and managed by computing device 101. The configuration information can also include components and data for respective configurations of corresponding access lists of computing devices 102, including for example configuration updates.

Referring again to Figure 2, Bluetooth manager 300 further comprises an access control module 270 which may comprise any combination of software, firmware and hardware. Access control module 270 is configured for restricting connection between first computing device 101 and a particular computing device (of the plurality of computing devices 102,103) based on the existence of the particular computing device on access list 291. For example, as described in relation to Figure 1, access control module 270 will not permit connection between first computing device 101 and computing device 103 as computing device 103 is not located on access list 291 during the restricted mode operation. As described herein, access control module 270 monitors connections when computing device 101 is operating in the restricted mode operation as defined by configuration module 260. Additionally, if a connection and/or pairing is made to an unsafe device (e.g. device 103) prior to entering the restricted mode of operation, access control module 270 is configured to drop the connection to the unsafe device (not listed on access list 291) upon entering the restricted mode of operation.

Additionally, as described above, the connection and communication between computing device 101 and "safe" computing devices 102 may be further subjected to additional verification means as provided by access control module 270 prior to allowing data communication between computing devices (e.g. 101 and 102). In one embodiment, access list 291 further defines specific services that computing device 101 is permitted to access on computing device 102 (or vice versa). Accordingly, access control module 270 may limit communication and transfer of information to those permitted services for computing device 102. In another embodiment, access control module 270 can determine that computing device 102 is a "safe" computing device as it is listed on access list 291 of computing device 101. Additionally, access control module 270 can be configured to request at least one pre-defined password or other authorization means prior to allowing exchange of data between computing devices 101 and 102. That is, access control module 270 can be configured to cause computing device 101 to operate in a limited communication mode that allows the exchange of password and/or authorization means between computing device 101 and a "safe" computing device (e.g. 102) but prevents data communication between computing device 101 and 102 until computing device 102 has provided the pre-defined authorization means. In yet another embodiment, safe computing device 102 may contain a second access list (not shown) stored on a memory thereon such that access control module 270 may monitor connection/pairing in dependence upon the existence of first computing device 101 on the second access list.

As will be understood by a person skilled in the art, the connection and/or pairing requests may be initiated on either first computing device 101 and/or computing device 102. In yet another embodiment, access control module 270 may be located on an external device communicating with access list 291 such that computing device 101 may need to obtain authorization from the external device (via access control module 270) prior to establishing connection with computing device 102.

Additionally, in one embodiment, at least some of the functionality of configuration module 260 may be offloaded to a different device of the plurality of computing devices (e.g. 102, 103). For example, in the scenario where configuration of access list 291 occurs on one computing device and then the same access list 291 may be installed or otherwise shared with another computing device (e.g. 101) then computing device 101 may not need to have the functionality to configure and modify access lists 291.

As further illustrated in Figure 2, the Bluetooth manager 300 further comprises a pairing and/or connection module 280 which may comprise any combination of software, firmware and hardware. Typically, in Bluetooth communications two devices should be paired in order to communicate with one another. The pairing process can be triggered automatically or user-initiated the first time a Bluetooth enabled device receives a connection request from a Bluetooth enabled device with which it is not yet paired. Once pairing has been established, the pairing is remembered by the Bluetooth enabled devices, which can then connect to each other without user intervention. In addition, a pairing can be removed by a user at any time. According to one embodiment, pairing module 280 communicates with access control module 270. In this embodiment, a pairing may be automatically removed if the computing device being paired to is not present on access list 291. Similarly, access control module 270 may prevent a new pairing to be added if the computing device being paired to is not on access list 291. In this manner Bluetooth manager 300 controls communications between first computing device 101 and other computing devices.

The remote database communicative coupled to computing device 101 may be accessed, and used to update computing device 101 via the GUI of computing device 101. It will be appreciated by one of ordinary skill in the art that computing device 101 may contain additional functions/elements/mechanisms other than those illustrated in Figure 2.

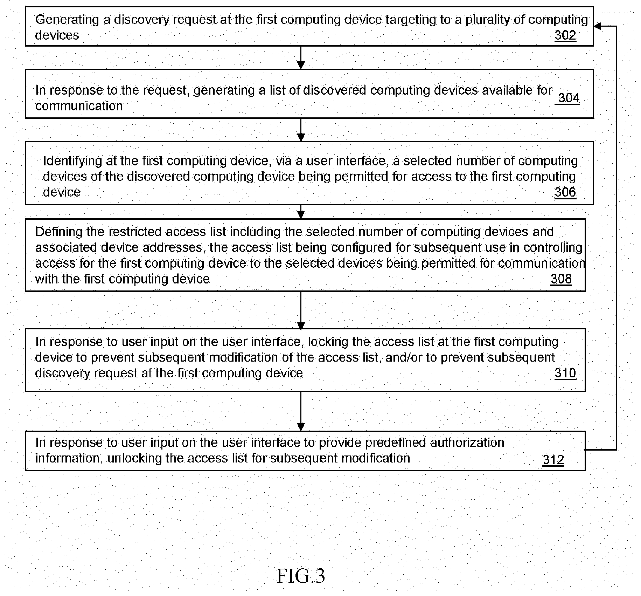

Figure 3 illustrates process steps involved in one embodiment of the present invention for configuring or provisioning an access list 291 on a first computing device 101 for defining communication and connection between first computing device 101 and a plurality of other computer devices (e.g. 102, 103) accessible in a Bluetooth communication local network.

At step 302, a discovery request is generated at computing device 101 such that the discovery request is targeted to at least one of the plurality of computing devices 102, 103 in a Bluetooth communication network. An example Bluetooth communication network is illustrated in Figure 1.

At step 304, in response to the discovery request, a list of discovered computing devices available for communication (e.g. devices 102, 103) is generated at computing device 101. The generated list may be displayed on display 222 of computing device 101 for subsequent interaction therewith via a graphical user interface. In response to the discovery request, informational elements associated with each of the discovered computing devices may also be received. The informational elements may be used for unique identification of the associated computing devices within access list 291. The informational elements also referred to as device identifiers may include one or more of the following: a serial number, a device model number, an IP address, a Bluetooth address (e.g. a 48-bit Bluetooth address), a terminal name, services offered by the device and any other information for establishing communication between computing device 101 and the discovered computing device (e.g. 102, 103).

At steps 306 and 308, one or more of the discovered computing devices may be assigned to access list 291 as being permitted to access first computing device 101. That is, once the discovered computing devices 102, 103 respond to the discovery request and communicate their information such as informational elements (also referred to as device identifiers) discussed herein, the informational elements (e.g. device address or Bluetooth address) can be added into access list 291 via configuration module 260 of first computing device 101, or in the remote database. In the example portrayed in Figure 1, from the discovered available computing devices 102 and 103, a selected number of computing devices (e.g. devices 102) are assigned to access list 291. As discussed above, access list 291 is then used (i.e. by access control module 270) to restrict or limit access for first computing device 101 to the selected computing devices (e.g. computing devices 102) being permitted to communicate with the first computing device 101, while preventing communication access between first computing device 101 and other computing devices not listed on access list 291 of computing device 101.

In another variation, it is contemplated that, at the graphical user interface (GUI) display of first computing device 101, one or more computing devices of the plurality of computing devices may be automatically added to access list 291 according to pre-defined criteria and that access list 291 may be modified by the operator or administrator.

At step 310 and in accordance with one embodiment, in response to user input received on the graphical user interface of first computing device 101, a restricted access mode of operation is initiated on first computing device 101. That is, in the restricted access mode, the user/administrator of first computing device 101 defines that no further modifications are to be made to access list 291 without pre-defined authorization measures (i.e. password) such that access list 291 may be locked to prevent subsequent modification. Additionally, the restricted mode of operation may also include preventing subsequent discovery requests being generated with first computing device 101.

At step 312, and in response to pre-defined user input received on the graphical user interface of first computing device 101 which provides pre-defined authorization information associated with access list 291, access list 291 may be unlocked for subsequent access and modification. In this variation, the restricted mode may be exited and additional devices discovered once unlocked.

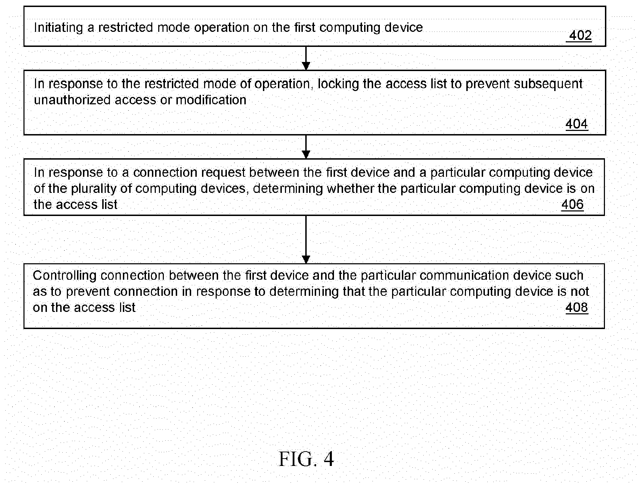

Figure 4 illustrates a process for using a restricted access list 291 stored on memory 290 of the first computing device 101 in accordance with an embodiment. As discussed earlier, access list 291 provides a list of a selected number of devices permitted to access (or communicate with) first computing device 101. Access list 291 defines communication between first computing device 101 and a plurality of computing devices (e.g. 102, 103) in a Bluetooth communication local network. As discussed earlier, the access list 291 may be defined locally on the first computing device 101 or defined on an external device (e.g. device 102) and later downloaded onto computing device 101. The configuration of the access list 291 may be downloaded onto the computing device 101 via the communication subsystem 211, auxiliary I/O subsystem 228, serial port 230, USB port 242, short-range communications subsystem 240, or any other suitable subsystem, for execution by microprocessor 238.

Access list 291 may be communicated in conjunction with an authorization password for authorizing changes to access list 291. As will be described, installation of external access list 291 will be prevented on a computing device by configuration module 260 if the computing device is operating in a restricted mode of operation. Additionally, in one aspect, the configuration module 260 can allow user input to determine how a newly added access list and its corresponding entries are to be integrated with a currently loaded access list 291 considering the computing device is not operating in a restricted mode of operation.

At step 402, a restricted mode of operation is initiated on first computing device 101 such that the restricted mode of operation is configured to secure access list 291 and prevent subsequent pre-defined unauthorized access or modification thereof at step 404. That is, once the restricted mode of operation is initiated, configuration module 260 prevents any modification to access list 291 currently in use. Furthermore, in one aspect, while the restricted mode of operation is active, configuration module 260 prevents the installation and/or use of any additional access lists other than the one that was on the computing device 101 when initiating restricted mode of operation. At step 406, in response to a connection request between first computing device 101 and a particular computing device (e.g. computing device 103), it is determined whether the particular computing device (e.g. 103) is on access list 291 of first computing device 101. If not, then first computing device 101 prevents communication access between first computing device 101 and the particular computing device (e.g. 103). That is, at step 408, the connection between first computing device 101 and the particular computing device (e.g. 103) is controlled in response to the existence of the particular computing device (e.g. 103) on access list 291.

For example, referring to Figure 1, since computing device 103 is not present on access list 291, a connection/pairing between first computing device 101 and particular computing device 103 can not be made. As discussed earlier, if a Bluetooth connection has been made between device 103 and 101, then such a connection is terminated in response to initiation of the restricted mode of operation.

In one variation, allowing connection between first computing device 101 and particular computing device (e.g. 103) is further related to the existence of first computing device 101 on a second access list (not shown) associated with that particular computing device (e.g. 103).

Referring to Figures 5A-5G there are illustrated example screen shots of a graphical user interface for configuring an access list 291 on a first computing device 101. In the example illustrated, Bluetooth manager 300 is implemented on the first computing device 101 running WindowsCE™, available from Microsoft. However, as will be understood by a person skilled in the art, other types of operating systems may be employed if desired such as but not limited to Windows Mobile™, Android™ OS, Apple iOS™, and Linux™. Referring to Figure 5A, shown is an icon 502 for initiating a Bluetooth Manager application on first computing device 101. The Bluetooth Manager application described in reference to Figures 5A-6C is an example of Bluetooth manger 300 illustrated in Fig. 2. In the example illustrated, the Bluetooth Manager application is a control panel applet of Windows CE.

Referring to Figure 5B, shown is a list 512 depicting discovered computing devices 508A and 508B (also referred to herein as devices available for communication) generated in response to a discovery request performed on first computing device 101. For example, the discovery request may be initiated by pressing the "SCAN" button in the "Device" tab as illustrated in Figure 5B. In response to the discovery request, the Bluetooth addresses 504A and 504B associated with each device 508A and 508B have been determined and are displayed in list 512. It is noted that Figures 5A-5E show first computing device 101 in the configuration mode such that restricted mode of operation has not yet been initiated.

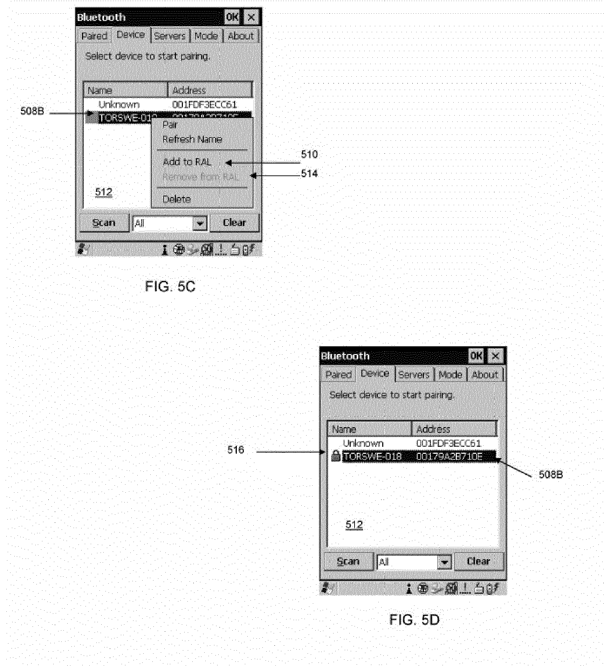

Referring to Figure 5C, by selecting one of the discovered devices (e.g. device 508B), a device menu 514 is presented. The device menu 514 provides the options of pairing first computing device 101 to the selected device 508B, and adding the discovered device 508B to the restricted access list ("RAL"), by selecting the associated option 510.

Additionally, the operator/administrator can remove a device from the restricted access list by selecting the option "Remove from RAL", as illustrated in menu 514. As discussed earlier, when the restricted mode of operation is activated on first computing device 101, only the computing devices in the restricted access list stored on the memory of first computing device 101 will be able to access first computing device 101 via Bluetooth. In Figure 5D, device 508B is added to the restricted access list for first computing device 101 and the discovered list 512 now shows a lock icon 516 beside device 508B to visually indicate that the device 508B is in the restricted access list (e.g. access list 291). It is noted that other methods of visually differentiating selected devices added to the restricted access list may be envisaged by a person skilled in the art.

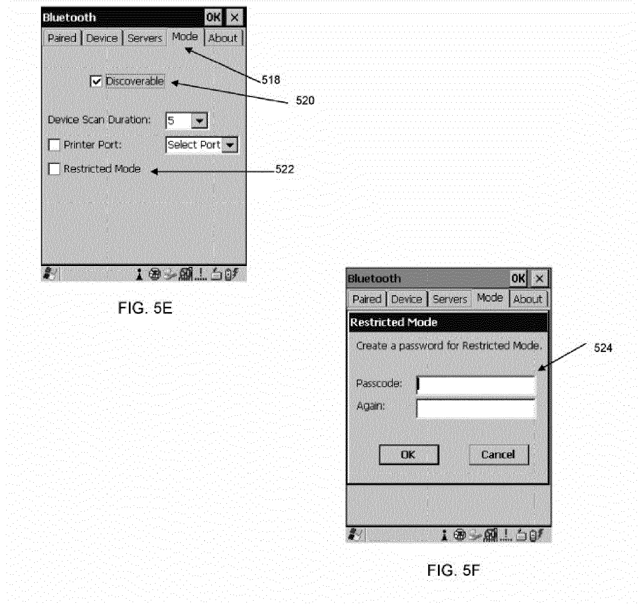

Referring to Figure 5E, shown is the "Mode" tab 518 of first computing device 101. The "Mode" tab 518 illustrates that first computing device 101 is currently discoverable, with check box 520, and allows the selection and activation of the restricted access mode, with check box 522.

As shown in Figure 5F, once the restricted access mode is selected, a password is requested in screen 524. The Bluetooth Manager is configured to remember the password such that if the user wishes to exit the restricted mode of operation, the password will need to be provided. In one aspect, the password is stored on a memory of first computing device 101 in encrypted form. In Figure 5F, once the password is entered twice (for confirmation purposes) at screen 524, first computing device 101 will be in restricted mode of operation. Accordingly, only remote device whose addresses (e.g. Bluetooth address) and/or other identification measures have been provided in the restricted access list will be able to access first computing device 101 once first computing device 101 enters the restricted mode of operation. Accordingly, as discussed earlier, if a different computing device (e.g. device 508A) attempts to access first computing device 101 while operating in restricted mode of operation, access control module 270 will prevent or inhibit the connection. As described earlier, if a Bluetooth connection was made between first computing device 101 and computing device 508A prior to entering the restricted mode of operation, then such connection is terminated and further communication inhibited once computing device 101 enter restricted mode of operation. An example selection of restricted mode of operation on computing device 101 is shown in Figure 5G and screen shot 526.

Referring now to Figure 6A, there is a "Servers" tab for the Bluetooth Manager where users can activate Bluetooth services shown at screen 602 offered by computing device 101 for remote devices within the Bluetooth communication network. However, as the computing device 101 is now in restricted mode of operation, the services controls are all ghosted or greyed out so that users won't be able to add or remove services. Accordingly, the locking mechanism triggered by the restricted mode of operation provides added security such that unauthorized users are not able to add or remove services. It is further noted that even if the services were not blocked as illustrated in screen shot 602, the computing devices not listed in the restricted access list are not able to access, or be accessed by, first computing device 101.

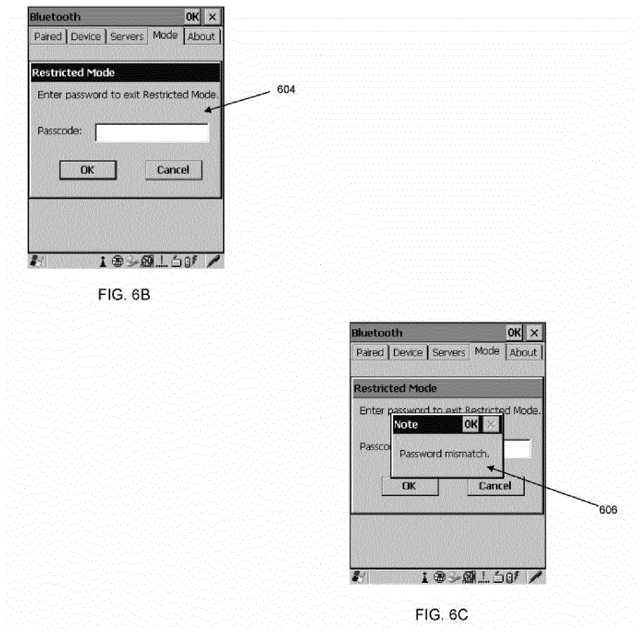

Referring now to Figure 6B, the user can exit the restricted mode by unselecting "restricted mode" in the "mode" tab. However, when the user attempts to exit the restricted mode of operation, the Bluetooth manager will request the authorization information (e.g. password). As illustrated in Figure 6C and screen shot 606, if the password is not authorized, the restricted access mode remains in force.

It is noted that the disclosure herein has been described with reference to specific embodiments; however, varying modifications thereof will be apparent to those skilled in the art without departing from the scope of the invention as defined by the appended claims.

## Claims

1. A method of controlling wireless communication between a master computing device (101) and a plurality of further computing devices (102, 103), the method comprising:
i) generating (302) a discovery request (250) at the master computing device (101), the discovery request (250) targeted to the plurality of further computing devices (102, 103) and configured to generate a list of discovered further computing devices (102, 103) for communication with the master computing device (101); and
ii) identifying (306) at the master computing device (101), via a user interface (222), at least one selected further computing device (102, 103) from the discovered further computing devices (102, 103) being permitted to access the master computing device (101), the at least one selected further computing device (102, 103) being defined with at least one device identifier to identify each of the at least one selected further computing device (102, 103) in an access list (291), wherein the access list (291) is configured and stored on the master computing device (101) for controlling said communication between the master computing device (101) and the plurality of further computing devices (102, 103);
***characterized in that***
iii) via a user interface (222) at the master computing device (101), an operator or administrator may interact to initiate a restricted mode of operation (402) on the master computing device (101), the restricted mode of operation being configured to:
(a) permit (408) communication between the master computing device (101) and at least one further computing device (102, 103) on the list of discovered further computing devices (102, 103) in response to determining that the device identifier of the at least one further computing device (102, 103) is on the access list (291); and
(b) prevent further communication (408) between the master computing device (101) and each further computing device (102, 103) on the list of discovered further computing devices (102, 103) in response to determining that the device identifier of each of the further computing devices (102, 103) on the list of discovered further computing devices (102, 103) is not on the access list, including terminating an existing connection between the master computing device (101) and each of the further computing devices (102, 103) upon determining that the device identifier of said each further computing device (102, 103) is not on the access list.

2. The method according to claim 1, wherein the device identifier is selected from a radio communication protocol address of the device, IP address of the device, MAC address of the device, serial number of the device, and a pre-defined device name.

3. The method according to claim 1, further comprising locking (310) the access list (291) to restrict subsequent modification on the master computing device (101).

4. The method of claim 3, wherein said locking (310) the access list (291) is configured to further prevent a subsequent discovery request at the master computing device (101).

5. The method according to claim 4, wherein the access list (291) defines at least one service for each of the at least one selected further computing devices (102,103) to subsequently restrict access between the master computing device (101) and the at least one selected further computing device permitted to access the master computing device (101) to the defined services.

6. The method according to claim 1, further comprising installing the access list (291) on at least one of the plurality of further computing devices (102,103), the access list (291) further configured for controlling communication for each of the further computing devices (102,103) to which the access list (291) is installed.

7. The method according to any of claims 1 to 6, which further comprises the restricted mode of operation being configured (404) to secure the access list (291) to prevent subsequent unauthorized modification thereof.

8. The method according to any previous claim, wherein the master computing device (101) and the plurality of further computing devices (102,103) form a Bluetooth communication network (101, 102, 103).

9. A master computing device (101) for controlling wireless communication between the master computing device (101) and a plurality of further computing devices (102,103) in a local network that allows short range communication, the master computing device (101) comprising:
a processor (238);
a user interface (222);
a memory coupled to the processor (238) having instructions stored thereon for execution by the processor, the memory comprising an access list (291) configured for controlling said communication between the master computing device (101) and the plurality of further computing devices (102,103), said access list (291) including device identifiers for said further computing devices (102,103), and said memory including instructions for:
i) generating (302) a discovery request (250) at the master computing device (101), the discovery request targeted to the plurality of further computing devices (102,103) and configured to generate a list of discovered further computing devices (102,103) for communication with the master computing device;
ii) identifying (306) at the master computing device (101), via a user interface (222), at least one selected further computing device (102, 103) from the discovered further computing devices (102, 103) being permitted to access the master computing device (101), the at least one selected further computing device (102, 103) being defined with at least one device identifier to identify each of the at least one selected further computing device (102, 103) in an access list (291);
***characterized in that***
iii) via said user interface (222) at the master computing device (101), an operator or administrator may interact to initiate a restricted mode of operation (402) on the master computing device (101), the restricted mode of operation being configured to:
(a) permit (408) communication between the master computing device (101) and at least one further computing device (102, 103) on the list of discovered further computing devices (102, 103) in response to determining that the device identifier of the at least one further computing device (102, 103) is on the access list (291); and
(b) prevent further communication (408) between the master computing device (101) and each further computing device (102, 103) on the list of discovered further computing devices (102, 103) in response to determining that the device identifier of each of the further computing devices (102, 103) on the list of discovered further computing devices (102, 103) is not on the access list, including terminating an existing connection between the master computing device (101) and each of the further computing devices (102, 103) upon determining that the device identifier of said each further computing device (102, 103) is not on the access list.

10. The master computing device (101) of claim 9, wherein the local network is a Bluetooth communication network (101, 102, 103).

11. The master computing device (101) of claim 9, wherein the device identifier is selected from a radio communication protocol address of the device, IP address of the device, MAC address of the device, serial number of the device, and a pre-defined device name.

12. The master computing device (101) of claim 9, further comprising:
the restricted mode of operation being configured (404) to secure the access list (291) to prevent subsequent unauthorized modification thereof; and
the restricted mode of operation comprises locking (310) the access list (291) to restrict subsequent modification on the master computing device (101) and to further prevent a subsequent discovery request at the master computing device (101).

13. The master computing device (101) of claim 9, wherein the access list (291) defines at least one service for each of the at least one selected further computing device to subsequently restrict access between the master computing device (101) and the at least one selected further computing device permitted to access the master computing device (101) to the defined services.

14. The master computing device (101) of claim 9, further comprising installing the access list (291) on at least one of the plurality of further computing devices (102,103), the access list (291) further configured for controlling communication for each of the further computing devices (102,103) to which the access list (291) is installed.

## Patentansprüche

1. Ein Verfahren zum Steuern einer drahtlosen Kommunikation zwischen einer Hauptcomputervorrichtung (101) und einer Mehrzahl von weiteren Computervorrichtungen (102, 103), wobei das Verfahren umfasst:
i) Erzeugen (302) einer Ermittlungsanfrage (250) an der Hauptcomputervorrichtung (101), wobei die Ermittlungsanfrage (250) auf die Mehrzahl von weiteren Computervorrichtungen (102, 103) abzielt und ausgestaltet ist, eine Liste von ermittelten weiteren Computervorrichtungen (102, 103) zu generieren, um mit der Hauptcomputervorrichtung (101) zu kommunizieren; und
ii) Identifizieren (306) an der Hauptcomputervorrichtung (101), über eine Benutzerschnittstelle (222), von zumindest einer ausgewählten der weiteren Computervorrichtungen (102, 103) von den ermittelten weiteren Computervorrichtungen (102, 103), denen es erlaubt ist auf die Hauptcomputervorrichtung (101) zuzugreifen, wobei die mindestens eine ausgewählte weitere Computervorrichtung (102, 103) mit mindestens einer Gerätekennung definiert ist, um jede der mindestens einen ausgewählten weiteren Computervorrichtung (102, 103) in einer Zugriffsliste zu identifizieren (291), wobei die Zugriffsliste (291) auf der Hauptcomputervorrichtung (101) konfiguriert und gespeichert ist, um die Kommunikation zwischen der Hauptcomputervorrichtung (101) und der Mehrzahl von weiteren Computervorrichtungen (102, 103) zu steuern;
**dadurch gekennzeichnet, dass**
iii) über eine Benutzerschnittstelle (222) an der Hauptcomputervorrichtung (101) ein Bediener oder Administrator interagieren kann, um einen eingeschränkten Betriebsmodus (402) auf der Hauptcomputervorrichtung (101) zu initiieren, wobei der eingeschränkte Betriebsmodus konfiguriert ist, um:
(a) eine Kommunikation zwischen der Hauptcomputervorrichtung (101) und mindestens einer weiteren Computervorrichtung (102, 103) aus der Liste der ermittelten weiteren Computervorrichtungen (102, 103) als Reaktion auf das Bestimmen, dass die Gerätekennung von der mindestens einen weiteren Computervorrichtung (102, 103) auf der Zugriffsliste (291) ist, zu erlauben (408); und
(b) eine weitere Kommunikation zwischen der Hauptcomputervorrichtung (101) und jeder weiteren Computervorrichtung (102, 103) aus der Liste der ermittelten weiteren Computervorrichtungen (102, 103) als Reaktion auf das Bestimmen, dass die Gerätekennung der weiteren Computervorrichtungen (102, 103) aus der Liste der ermittelten weiteren Computervorrichtungen (102, 103) nicht auf der Zugriffsliste ist, zu verhindern (408), einschließlich Beenden einer bestehenden Verbindung zwischen der Hauptcomputervorrichtung (101) und jeder der weiteren Computervorrichtungen (102, 103), wenn bestimmt wird, dass die Gerätekennung von jeder genannten weiteren Computervorrichtung (102, 103) nicht auf der Zugriffsliste ist.

2. Das Verfahren nach Anspruch 1, wobei die Gerätekennung aus einer Radiokommunikationsprotokolladresse des Geräts, der IP-Adresse des Geräts, der MAC-Adresse des Geräts, der Seriennummer des Geräts und einem vordefinierten Gerätenamen ausgewählt wird.

3. Das Verfahren nach Anspruch 1, ferner umfassend das Sperren (310) der Zugriffsliste (291), um eine nachfolgende Modifikation an der Hauptcomputervorrichtung (101) zu beschränken.

4. Das Verfahren nach Anspruch 3, wobei das genannte Sperren (310) der Zugriffsliste (291) konfiguriert ist, um eine nachfolgende Ermittlungsanfrage an der Hauptcomputervorrichtung (101) weiter zu verhindern.

5. Das Verfahren nach Anspruch 4, wobei die Zugriffsliste (291) mindestens einen Dienst für jede der mindestens einen ausgewählten weiteren Computervorrichtungen (102, 103) definiert, um anschließend den Zugriff zwischen der Hauptcomputervorrichtung (101) und der mindestens einen ausgewählten weiteren Computervorrichtung zu beschränken, wobei die ausgewählte weitere Computervorrichtung auf die Hauptcomputervorrichtung (101) zu den definierten Diensten zugreifen darf.

6. Das Verfahren nach Anspruch 1, ferner umfassend das Installieren der Zugriffsliste (291) auf mindestens einer der Mehrzahl von weiteren Computervorrichtungen (102, 103), wobei die Zugriffsliste (291) ferner zum Steuern der Kommunikation für jede der weiteren Computervorrichtungen (102,103) konfiguriert ist, auf dem die Zugriffsliste (291) installiert ist.

7. Das Verfahren nach einem der Ansprüche 1 bis 6, das ferner den eingeschränkten Betriebsmodus umfasst, der konfiguriert ist (404), um die Zugriffsliste (291) zu sichern, um eine nachfolgende unautorisierte Modifikation davon zu verhindern.

8. Das Verfahren nach einem der vorhergehenden Ansprüche, wobei die Hauptcomputervorrichtung (101) und die Mehrzahl von weiteren Computervorrichtungen (102, 103) ein Bluetooth-Kommunikationsnetzwerk (101, 102, 103) bilden.

9. Eine Hauptcomputervorrichtung (101) zum Steuern einer drahtlosen Kommunikation zwischen der Hauptcomputervorrichtung (101) und einer Mehrzahl von weiteren Computervorrichtungen (102, 103) in einem lokalen Netzwerk, das Kurzstreckenkommunikation erlaubt, wobei die Hauptcomputervorrichtung (101) umfasst:
einen Prozessor (238);
eine Benutzerschnittstelle (222);
einen Speicher, der mit dem Prozessor (238) gekoppelt ist, auf dem Befehle zur Ausführung durch den Prozessor gespeichert sind, wobei der Speicher eine Zugriffsliste (291) umfasst, die zum Steuern der Kommunikation zwischen der Hauptcomputervorrichtung (101) und der Mehrzahl weiterer Computervorrichtungen (102, 103) konfiguriert ist, wobei die genannte Zugriffsliste (291) Gerätekennungen für die weiteren Computergeräte (102, 103) enthält und der Speicher Anweisungen enthält für:
i) Erzeugen (302) einer Ermittlungsanfrage (250) an der Hauptcomputervorrichtung (101), wobei die Ermittlungsanfrage (250) auf die Mehrzahl von weiteren Computervorrichtungen (102, 103) abzielt und ausgestaltet ist, eine Liste von ermittelten weiteren Computervorrichtungen (102, 103) zu generieren, um mit der Hauptcomputervorrichtung (101) zu kommunizieren;
ii) Identifizieren (306) an der Hauptcomputervorrichtung (101), über eine Benutzerschnittstelle (222), von zumindest einer ausgewählten der weiteren Computervorrichtungen (102, 103) von den ermittelten weiteren Computervorrichtungen (102, 103), denen es erlaubt ist auf die Hauptcomputervorrichtung (101) zuzugreifen, wobei die mindestens eine ausgewählte weitere Computervorrichtung (102, 103) mit mindestens einer Gerätekennung definiert ist, um jede der mindestens einen ausgewählten weiteren Computervorrichtung (102, 103) in einer Zugriffsliste zu identifizieren (291);
**dadurch gekennzeichnet, dass**
iii) über eine Benutzerschnittstelle (222) an der Hauptcomputervorrichtung (101) ein Bediener oder Administrator interagieren kann, um einen eingeschränkten Betriebsmodus (402) auf der Hauptcomputervorrichtung (101) zu initiieren, wobei der eingeschränkte Betriebsmodus konfiguriert ist, um:
(a) eine Kommunikation zwischen der Hauptcomputervorrichtung (101) und mindestens einer weiteren Computervorrichtung (102, 103) aus der Liste der ermittelten weiteren Computervorrichtungen (102, 103) als Reaktion auf das Bestimmen, dass die Gerätekennung von der mindestens einen weiteren Computervorrichtung (102, 103) auf der Zugriffsliste (291) ist, zu erlauben (408); und
(b) eine weitere Kommunikation zwischen der Hauptcomputervorrichtung (101) und jeder weiteren Computervorrichtung (102, 103) aus der Liste der ermittelten weiteren Computervorrichtungen (102, 103) als Reaktion auf das Bestimmen, dass die Gerätekennung der weiteren Computervorrichtungen (102, 103) aus der Liste der ermittelten weiteren Computervorrichtungen (102, 103) nicht auf der Zugriffsliste ist, zu verhindern (408), einschließlich Beenden einer bestehenden Verbindung zwischen der Hauptcomputervorrichtung (101) und jeder der weiteren Computervorrichtungen (102, 103), wenn bestimmt wird, dass die Gerätekennung von jeder genannten weiteren Computervorrichtung (102, 103) nicht auf der Zugriffsliste ist.

10. Die Hauptcomputervorrichtung (101) nach Anspruch 9, wobei das lokale Netzwerk ein Bluetooth-Kommunikationsnetzwerk (101, 102, 103) ist.

11. Die Hauptcomputervorrichtung (101) nach Anspruch 9, wobei die Gerätekennung aus einer Radiokommunikationsprotokolladresse des Geräts, der IP-Adresse des Geräts, der MAC-Adresse des Geräts, der Seriennummer des Geräts und einem vordefinierten Gerätenamen ausgewählt wird.

12. Die Hauptcomputervorrichtung (101) nach Anspruch 9, ferner umfassend:
den eingeschränkten Betriebsmodus, der konfiguriert ist (404), um die Zugriffsliste (291) zu sichern, um eine nachfolgende unautorisierte Modifikation davon zu verhindern; und
den eingeschränkten Betriebsmodus, der das Sperren (310) der Zugriffsliste (291) umfasst, um eine nachfolgende Modifikation an der Hauptcomputervorrichtung (101) zu beschränken und ferner eine nachfolgende Ermittlungsanfrage an der Hauptcomputervorrichtung (101) zu verhindern.

13. Die Hauptcomputervorrichtung (101) nach Anspruch 9, wobei die Zugriffsliste (291) mindestens einen Dienst für jede der mindestens einen ausgewählten weiteren Computervorrichtungen (102, 103) definiert, um anschließend den Zugriff zwischen der Hauptcomputervorrichtung (101) und der mindestens einen ausgewählten weiteren Computervorrichtung zu beschränken, wobei die ausgewählte weitere Computervorrichtung auf die Hauptcomputervorrichtung (101) zu den definierten Diensten zugreifen darf.

14. Die Hauptcomputervorrichtung (101) nach Anspruch 9, ferner umfassend das Installieren der Zugriffsliste (291) auf mindestens einer der Mehrzahl von weiteren Computervorrichtungen (102, 103), wobei die Zugriffsliste (291) ferner zum Steuern der Kommunikation für jede der weiteren Computervorrichtungen (102,103) konfiguriert ist, auf dem die Zugriffsliste (291) installiert ist.

## Revendications

1. Un procédé de commande de communication sans fil entre un dispositif de calcul principal (101) et une pluralité d'autres dispositifs de calcul (102, 103), le procédé comprenant:
i) générer (302) une demande de découverte (250) au niveau du dispositif de calcul principal (101), la demande de découverte (250) ciblée sur la pluralité d'autres dispositifs de calcul (102, 103) et configurée pour générer une liste de dispositifs de calcul supplémentaire détectés (102, 103) pour la communication avec le dispositif de calcul principal (101); et
ii) identifier (306) au niveau du dispositif de calcul principal (101), via une interface utilisateur (222), au moins un autre dispositif de calcul sélectionné (102, 103) parmi les dispositifs de calcul supplémentaires détectés (102, 103) étant autorisés à accéder au dispositif de calcul principal (101), ledit au moins un autre dispositif de calcul sélectionné (102, 103) étant défini avec au moins un identifiant de dispositif pour identifier chacun desdits au moins un autre dispositif de calcul sélectionné (102, 103) dans une liste d'accès (291), dans lequel la liste d'accès (291) est configurée et stockée sur le dispositif de calcul principal (101) pour commander ladite communication entre le dispositif de calcul principal (101) et la pluralité d'autres dispositifs de calcul (102, 103);
**caractérisé en ce que**
iii) via une interface utilisateur (222) au niveau du dispositif de calcul principal (101), un opérateur ou un administrateur peut interagir pour initier un mode de fonctionnement restreint (402) sur le dispositif de calcul principal (101), le mode de fonctionnement restreint étant configuré pour :
(a) autoriser (408) la communication entre le dispositif de calcul principal (101) et au moins un autre dispositif de calcul (102, 103) sur la liste des autres dispositifs de calcul détectés (102, 103) en réponse à la détermination que l'identifiant de dispositif du au moins un autre dispositif de calcul (102, 103) est sur la liste d'accès (291); et
(b) empêcher une communication supplémentaire (408) entre le dispositif de calcul principal (101) et chaque autre dispositif de calcul (102, 103) sur la liste des autres dispositifs de calcul détectés (102, 103) en réponse à la détermination que l'identifiant de dispositif des autres dispositifs de calcul (102, 103) sur la liste des autres dispositifs de calcul détectés (102, 103) n'est pas sur la liste d'accès, y compris la terminaison d'une connexion existante entre le dispositif de calcul principal (101) et chacun des autres dispositifs de calcul (102, 103) lors de la détermination que l'identifiant de dispositif de chaque autre dispositif de calcul (102, 103) ne figure pas sur la liste d'accès.

2. Le procédé selon la revendication 1, dans lequel l'identifiant de dispositif est choisi parmi une adresse de protocole de communication radio du dispositif, l'adresse IP du dispositif, l'adresse MAC du dispositif, le numéro de série du dispositif et un nom de dispositif prédéfini.

3. Le procédé selon la revendication 1, comprenant en outre verrouiller (310) la liste d'accès (291) pour limiter une modification ultérieure sur le dispositif de calcul principal (101).

4. Le procédé selon la revendication 3, dans lequel ladite fonction de verrouillage (310) de la liste d'accès (291) est configurée pour empêcher en outre une demande de découverte ultérieure au niveau du dispositif de calcul principal (101).

5. Le procédé selon la revendication 4, dans lequel la liste d'accès (291) définit au moins un service pour chacun des au moins un autre dispositif de calcul sélectionné (102, 103) pour restreindre ensuite l'accès entre le dispositif de calcul principal (101) et l'au moins un autre dispositif de calcul sélectionné autorisé à accéder au dispositif de calcul principal (101) aux services définis.

6. Le procédé selon la revendication 1, comprenant en outre installer la liste d'accès (291) sur au moins un de la pluralité de dispositifs de calcul supplémentaires (102, 103), la liste d'accès (291) étant en outre configurée pour commander la communication pour chacun des autres dispositifs de calcul (102,103) auquel la liste d'accès (291) est installée.

7. Le procédé selon l'une quelconque des revendications 1 à 6, qui comprend en outre le mode de fonctionnement restreint configuré (404) pour sécuriser la liste d'accès (291) afin d'empêcher toute modification ultérieure non autorisée de celle-ci.

8. Le procédé selon l'une quelconque des revendications précédentes, dans lequel le dispositif de calcul principal (101) et la pluralité d'autres dispositifs de calcul (102, 103) forment un réseau de communication Bluetooth (101, 102, 103).

9. Un dispositif de calcul principal (101) pour commander une communication sans fil entre le dispositif de calcul principal (101) et une pluralité d'autres dispositifs de calcul (102, 103) dans un réseau local permettant une communication à courte portée, le dispositif de calcul principal (101) comprenant:
un processeur (238);
une interface utilisateur (222);
une mémoire couplée au processeur (238) ayant des instructions stockées pour exécution par le processeur, la mémoire comprenant une liste d'accès (291) configurée pour commander ladite communication entre le dispositif de calcul principal (101) et la pluralité d'autres dispositifs de calcul (102,103), ladite liste d'accès (291) comprenant des identifiants de dispositif pour lesdits autres dispositifs de calcul (102, 103), et ladite mémoire comprenant des instructions pour:
i) générer (302) une demande de découverte (250) au niveau du dispositif de calcul principal (101), la demande de découverte (250) ciblée sur la pluralité d'autres dispositifs de calcul (102, 103) et configurée pour générer une liste de dispositifs de calcul supplémentaire détectés (102, 103) pour la communication avec le dispositif de calcul principal (101);
ii) identifier (306) au niveau du dispositif de calcul principal (101), via une interface utilisateur (222), au moins un autre dispositif de calcul sélectionné (102, 103) parmi les dispositifs de calcul supplémentaires détectés (102, 103) étant autorisés à accéder au dispositif de calcul principal (101), ledit au moins un autre dispositif de calcul sélectionné (102, 103) étant défini avec au moins un identifiant de dispositif pour identifier chacun desdits au moins un autre dispositif de calcul sélectionné (102, 103) dans une liste d'accès (291), ;
**caractérisé en ce que**
iii) via une interface utilisateur (222) au niveau du dispositif de calcul principal (101), un opérateur ou un administrateur peut interagir pour initier un mode de fonctionnement restreint (402) sur le dispositif de calcul principal (101), le mode de fonctionnement restreint étant configuré pour:
(a) autoriser (408) la communication entre le dispositif de calcul principal (101) et au moins un autre dispositif de calcul (102, 103) sur la liste des autres dispositifs de calcul détectés (102, 103) en réponse à la détermination que l'identifiant de dispositif du au moins un autre dispositif de calcul (102, 103) est sur la liste d'accès (291); et
(b) empêcher une communication supplémentaire (408) entre le dispositif de calcul principal (101) et chaque autre dispositif de calcul (102, 103) sur la liste des autres dispositifs de calcul détectés (102, 103) en réponse à la détermination que l'identifiant de dispositif des autres dispositifs de calcul (102, 103) sur la liste des autres dispositifs de calcul détectés (102, 103) n'est pas sur la liste d'accès, y compris la terminaison d'une connexion existante entre le dispositif de calcul principal (101) et chacun des autres dispositifs de calcul (102, 103) lors de la détermination que l'identifiant de dispositif de chaque autre dispositif de calcul (102, 103) ne figure pas sur la liste d'accès.

10. Le dispositif de calcul principal (101) selon la revendication 9, dans lequel le réseau local est un réseau de communication Bluetooth (101, 102, 103).

11. Le dispositif de calcul principal (101) selon la revendication 9, dans lequel l'identifiant de dispositif est choisi parmi une adresse de protocole de communication radio du dispositif, l'adresse IP du dispositif, l'adresse MAC du dispositif, le numéro de série du dispositif et un nom de dispositif prédéfini.

12. Le dispositif de calcul principal (101) selon la revendication 9, comprenant en outre:
le mode de fonctionnement restreint étant configuré (404) pour sécuriser la liste d'accès (291) pour empêcher toute modification ultérieure non autorisée de celle-ci; et
le mode de fonctionnement restreint comprend verrouiller (310) la liste d'accès (291) pour limiter une modifications ultérieure sur le dispositif de calcul principal (101) et pour empêcher en outre une demande de découverte ultérieure au dispositif de calcul principal (101).

13. Le dispositif de calcul principal (101) selon la revendication 9, dans lequel la liste d'accès (291) définit au moins un service pour chacun des au moins un autre dispositif de calcul sélectionné pour restreindre ensuite l'accès entre le dispositif de calcul principal (101) et l'au moins un autre dispositif de calcul sélectionné autorisé à accéder au dispositif de calcul principal (101) aux services définis.

14. Le dispositif de calcul principal (101) selon la revendication 9, comprenant en outre installer la liste d'accès (291) sur au moins un de la pluralité de dispositifs de calcul supplémentaires (102, 103), la liste d'accès (291) étant en outre configurée pour commander la communication pour chacun des autres dispositifs de calcul (102,103) auquel la liste d'accès (291) est installée.
